# EUROPÄISCHE PATENTSCHRIFT

(11) **EP 3 430 257 B1**
(45) Veröffentlichungstag und Bekanntmachung des Hinweises auf die Patenterteilung: **05.02.2020**
(21) Anmeldenummer: 17701635.9
(22) Anmeldetag: 04.01.2017
(51) Int. Cl.: F03D 7/04, F03D 17/00

(54) **VERFAHREN ZUR BESTIMMUNG DER WINDGESCHWINDIGKEIT SOWIE ANLAGE ZUR DURCHFÜHRUNG DESSELBEN**
METHOD FOR DETERMINING WIND SPEED AND PLANT FOR PERFORMING SAID METHOD
PROCÉDÉ DE DÉTERMINATION DE LA VITESSE DU VENT ET INSTALLATION DE MISE EN OEUVRE

(30) Priorität: 16.03.2016 AT 5004516 U
(43) Veröffentlichungstag der Anmeldung: 23.01.2019
(73) Patentinhaber: Uptime Holding GmbH, 8010 Graz (AT)
(72) Erfinder: GRAY, Christopher, 8010 Graz (AT); LANGMAYR, Franz, 8020 Graz (AT)
(74) Vertreter: Wirnsberger & Lerchbaum Patentanwälte OG
(86) Internationale Anmeldenummer: PCT/AT2017/060001
(87) Internationale Veröffentlichungsnummer: WO 2017/156562

(56) Entgegenhaltungen:
- EP-A2- 2 667 022
- US-A1- 2010 078 940

## Beschreibung

Die Erfindung betrifft ein Verfahren zur Bestimmung einer Windgeschwindigkeit in einer Anlage mit zumindest zwei beabstandeten Windkraftanlagen.

Weiter betrifft die Erfindung eine Anlage mit zumindest zwei beabstandeten Windkraftanlagen.

Aus dem Stand der Technik sind verschiedene Verfahren zur Bestimmung der Windgeschwindigkeit in Windparks bekannt geworden. US 2010/078940 A1 offenbart zum Beispiel einen Windpark mit Windkraftanlagen, die ein Anemometer aufweisen. Üblicherweise wird die Windgeschwindigkeit dabei mittels eines an einer Windkraftanlage angebrachten Anemometers oder mittels Ultraschall an einer Rotornabe gemessen. Derartige Messungen sind jedoch ungenau, da die Messung immer punktuell in einem turbulenten Strömungsbereich erfolgt. Relevant für eine Regelung von Windkraftanlagen ist jedoch eine mittlere Windgeschwindigkeit in einem Bereich, welchen Rotorblätter der Windkraftanlage bei einer Umdrehung durchlaufen.

Mit Verfahren des Standes der Technik bestimmte Windgeschwindigkeiten sind daher für eine Regelung der Windkraftanlagen nur bedingt aussagekräftig. Darüber hinaus sind zur Durchführung von Verfahren des Standes der Technik Messeinrichtungen erforderlich, welche sowohl teuer als auch wartungsintensiv sind.

Hier setzt die Erfindung an. Aufgabe der Erfindung ist es, ein Verfahren der eingangs genannten Art anzugeben, mit welchem ein besonders aussagekräftiges Messergebnis erreichbar ist.

Ferner soll eine Anlage der eingangs genannten Art zur Durchführung eines derartigen Verfahrens angegeben werden.

Die erste Aufgabe wird erfindungsgemäß durch ein Verfahren der eingangs genannten Art gelöst, wobei bei den zumindest zwei Windkraftanlagen ein Auftreten einer Änderung der lokalen Windgeschwindigkeit erfasst wird, wonach zumindest eine Zeitdifferenz bestimmt wird, um welche die lokalen Änderungen bei den zumindest zwei Windkraftanlagen versetzt auftreten, wonach anhand der Zeitdifferenz und eines Abstandes zwischen den Windkraftanlagen die Windgeschwindigkeit bestimmt wird.

Im Rahmen der Erfindung wurde erkannt, dass eine Geschwindigkeit von Windböen und somit eine Windgeschwindigkeit in einer entsprechenden Anlage auf äußerst einfache Weise dadurch ermittelbar ist, dass bei den einzelnen Windkraftanlagen lokale Änderungen der Windgeschwindigkeit ermittelt werden und ein in aller Regel bekannter Abstand zwischen den Windkraftanlagen durch die Zeitdifferenz dividiert wird, um welche die Änderungen der Windgeschwindigkeit bei den einzelnen Windkraftanlagen versetzt auftreten. Die dabei erhaltene Windgeschwindigkeit entspricht der Geschwindigkeit, mit welcher sich die Windböe bzw. Strömungsdiskontinuität innerhalb des Strömungsfeldes der Anlage zwischen den einzelnen Windkraftanlagen ausbreitet bzw. einer Geschwindigkeit einer Front höherer Geschwindigkeit, welche durch die Anlage strömt. Ein Messergebnis entspricht somit im Unterschied zu mit Verfahren des Standes der Technik ermittelten Messergebnissen nicht bloß einer punktuellen Windgeschwindigkeit, sodass das Messergebnis wesentlich aussagekräftiger ist und besser zur Regelung der Windkraftanlagen bzw. der gesamten Anlage herangezogen werden kann.

Eine Änderung der lokalen Windgeschwindigkeit an einer Windkraftanlage kann mit verschiedensten aus dem Stand der Technik bekannten Verfahren und Vorrichtungen ermittelt werden, beispielsweise auch mit herkömmlichen Anemometern oder dergleichen.

Günstig ist es, wenn das Auftreten einer Änderung der lokalen Windgeschwindigkeit durch Messung einer von der Windgeschwindigkeit abhängigen Zustandsgröße der Windkraftanlage, insbesondere einer durch Wind erzeugten Leistung, erfolgt. Da bei dem erfindungsgemäßen Verfahren die Windgeschwindigkeit durch Erfassung einer Ausbreitung einer Änderung der Windgeschwindigkeit bestimmt wird, ist an den einzelnen Windkraftanlagen eine genaue Bestimmung der lokalen absoluten Windgeschwindigkeit nicht erforderlich. Zur Erfassung einer Änderung der lokalen Windgeschwindigkeit kann grundsätzlich jede Zustandsgröße der Windkraftanlage herangezogen werden, welche von der Windgeschwindigkeit abhängig ist, auch wenn ein exakter Zusammenhang zwischen der absoluten Windgeschwindigkeit und der jeweiligen Zustandsgröße nicht bekannt ist. Beispielsweise kann somit eine Änderung der lokalen Windgeschwindigkeit durch Messung eines Schallpegels oder Erfassung mechanischer Belastungen von Bauteilen der Windkraftanlage bzw. Änderungen dieser Zustandsgrößen erfolgen. So kann die Erfassung einer Änderung der lokalen Windgeschwindigkeit beispielsweise durch Erfassung von Änderungen in mechanischen Spannungen bzw. damit einhergehenden Änderungen von Verformungen in einem Mast, Rotorblättern oder Teilen eines Antriebsstranges der Windkraftanlage erfolgen. Unter anderem kann somit auch ein Generatormoment als Zustandsgröße zur Erfassung einer geänderten Windgeschwindigkeit herangezogen werden, da Änderungen der Windgeschwindigkeit ein geändertes Generatormoment bedingen können.

Bis zu einer Windgeschwindigkeit von ca. 12 m/s wirkt sich eine Änderung der Windgeschwindigkeit bei Windkraftanlagen des Standes der Technik in der Regel auf eine Änderung einer Rotorgeschwindigkeit aus, sodass zumindest in einem Bereich bis zur genannten Windgeschwindigkeit auch eine Rotordrehzahl zur Erfassung von Änderungen der Windgeschwindigkeit herangezogen werden kann. Besonders hochfrequente Schwankungen der Windgeschwindigkeit werden üblicherweise durch eine Trägheit des als Tiefpass wirkenden Rotors der Windkraftanlage gedämpft, sodass ein Messergebnis mit hoher Aussagekraft erreicht wird. Bei höheren Windgeschwindigkeiten wird üblicherweise mittels einer Regelung ein Blatt-Anstellwinkel geändert, um über einer definierten Drehzahl liegende Rotorgeschwindigkeiten zu vermeiden. Es kann daher auch der geregelte Blatt-Anstellwinkel als Zustandsgröße zur Erfassung einer Änderung der Windgeschwindigkeit herangezogen werden.

Zur Bestimmung der Zeitdifferenz kann bei kontinuierlichen Messsignalen von Zustandsgrößen von zumindest zwei Windkraftanlagen eine Korrelation der Zustandsgrößen bestimmt werden, beispielsweise indem ein Signal gegen das andere Signal analysiert wird, und daraus die Zeitdifferenz abgeleitet wird, um welche Fluktuationen der Windgeschwindigkeit die nachgelagerte Windkraftanlage später erreichen. Aus der Zeitdifferenz und dem Abstand zwischen den Windkraftanlagen ergibt sich die Windgeschwindigkeit unmittelbar, sodass insbesondere bei kontinuierlicher von Zustandsgrößen auch bei geringen Fluktuationen der Windgeschwindigkeit eine Bestimmung der Windgeschwindigkeit mit dem erfindungsgemäßen Verfahren möglich ist.

Wenngleich das Verfahren auch mit Windböen geringer Stärke umsetzbar ist, ist es günstig, wenn eine besonders starke Windböe die Anlage durchströmt, da ein Auftreffen derselben auf einzelne Windkraftanlagen besonders genau erfassbar ist, sodass Änderung von Zustandsgrößen, beispielsweise Leistungsänderungen, bei den einzelnen Windkraftanlagen einer Windböe zugeordnet werden können. Es kann jedoch auch vorgesehen sein, dass Änderungen von Zustandsgrößen, welche zur Ermittlung einer Änderung der lokalen Windgeschwindigkeit herangezogen werden, der einzelnen Windkraftanlagen beispielsweise in Bezug auf Amplitude und Dauer verglichen werden, um korrespondierende Änderungen zu identifizieren, welche durch dieselbe Windböe bedingt sind. Dadurch ist das Verfahren auch umsetzbar, wenn mehrere Windböen eine Anlage in kurzen Abständen und unterschiedlichen Richtungen durchströmen.

Darüber hinaus können auch elektrische Zustandsgrößen zur Erfassung einer lokalen Änderung der Windgeschwindigkeit herangezogen werden, welche von der Windgeschwindigkeit abhängig sind bzw. mit der Windgeschwindigkeit korrelieren, insbesondere von der Windkraftanlage abgegebenen elektrischen Leistung.

Die Erfassung einer lokalen Änderung der Windgeschwindigkeit über eine Änderung der von der Windkraftanlage abgegebenen elektrischen Leistung hat sich zur Durchführung des Verfahrens besonders bewährt, da die abgegebene Leistung bei Windkraftanlagen in aller Regel ohnedies erfasst wird und die abgegebene Leistung gleichzeitig eine gute Korrelation mit einem Mittelwert der lokalen Windgeschwindigkeit auf einer Fläche aufweist, welche von Rotorblättern der Windkraftanlage bei einer Umdrehung durchlaufen wird.

Nachdem beim erfindungsgemäßen Verfahren die Windgeschwindigkeit über eine Zeitdifferenz zwischen dem Auftreffen einer Windböe auf beabstandete Windkraftanlagen und einem Abstand der Windkraftanlagen bestimmt wird, ist eine Genauigkeit der Messung abhängig von einer Genauigkeit der Erfassung der Zeitdifferenz sowie einer Genauigkeit, mit welcher der Abstand zwischen den Windkraftanlagen in die Rechnung eingeht. Der Abstand zwischen den Windkraftanlagen kann beispielsweise mittels Lasermesstechnik mit hoher Genauigkeit bestimmt werden. Insbesondere bei hohen Windkraftanlagen wirkt sich auch eine Durchbiegung eines Mastes signifikant auf einen Abstand zwischen den Windkraftanlagen aus. Bei identen Windkraftanlagen erfolgt bei identer Windgeschwindigkeit auch eine idente Durchbiegung, weswegen die Auswirkung einer Mastdurchbiegung auf den Abstand zwischen den Windkraftanlagen bei identen Windkraftanlagen vernachlässigbar ist.

Sofern Windkraftanlagen unterschiedlichen Typs eingesetzt werden, können allfällige Abweichungen bei Steifigkeiten der einzelnen Typen bzw. sich daraus ergebende unterschiedliche Mastdurchbiegungen zwischen einzelnen Windkraftanlagen natürlich auch rechnerisch berücksichtigt werden.

Es versteht sich, dass ein Einfluss einer Ungenauigkeit bei Bestimmung der Zeitdifferenz einen umso kleineren Einfluss auf eine Genauigkeit des Messergebnisses hat, je größer der Abstand zwischen den Windkraftanlagen ist.

Um in üblichen Windkraftparks, bei welchen ein Abstand zwischen einzelnen Windkraftanlagen etwa 100 m beträgt, die Windgeschwindigkeit mit hoher Genauigkeit bestimmen zu können, ist es günstig, wenn die Zustandsgröße kontinuierlich oder mit einer Abtastfrequenz von mehr als 0,1 Hz, insbesondere mehr als 1 Hz, vorzugsweise mehr als 10 Hz, gemessen wird. Dadurch wird bei einer Windgeschwindigkeit von etwa 10 m/s ein geringer Messfehler von ca. 2 % erreicht, wenn benachbarte Windkraftanlagen mit einem Abstand von ca. 100 m für die Bestimmung der Windgeschwindigkeit herangezogen werden. Soll eine höhere Genauigkeit erreicht werden, kann die Abtastfrequenz auch höher sein. Ferner können zur Erreichung einer besonders hohen Genauigkeit Windkraftanlagen mit einem sehr großen Abstand eingesetzt werden.

Wird die Leistung als Zustandsgröße zur Erfassung einer lokalen Änderung der Windgeschwindigkeit herangezogen, ist somit die Leistung durch entsprechende Messtechnik mit der vorstehend genannten Frequenz zu erfassen, um die gewünschte Genauigkeit zu erreichen. Üblicherweise tritt eine Leistungsänderung gegenüber einer Änderung der Windgeschwindigkeit verzögert auf. Eine Verzögerung kann beispielsweise durch eine Trägheit von Bauteilen eines Antriebsstranges der Windkraftanlage bedingt sein. Die Verzögerung, mit welcher sich somit eine Änderung der lokalen Windgeschwindigkeit auf eine Änderung der von der Turbine abgegebenen Leistung auswirkt, ist bei Windkraftanlagen desselben Typs in der Regel ident und kann daher vernachlässigt werden. Werden Windkraftanlagen unterschiedlichen Typs bzw. Windkraftanlagen eingesetzt, bei welchen sich unterschiedlich Verzögerungen zwischen einer Änderung der lokalen Windgeschwindigkeit und einer Leistungsänderung ergeben, können diese unterschiedlichen Verzögerungen bei Bestimmung der Zeitdifferenz ebenfalls rechnerisch berücksichtigt werden, um eine hohe Messgenauigkeit zu erreichen.

Günstig ist es, wenn Messergebnisse gespeichert werden und aus mehreren Messergebnissen ein Zusammenhang zwischen der Windgeschwindigkeit und zumindest einem Zustandswert der Windkraftanlage gebildet wird. Dadurch ist über den ermittelten Zusammenhang bzw. eine gefundene Korrelation zwischen der Zustandsgröße und der Windgeschwindigkeit eine Bestimmung der Windgeschwindigkeit auch dann möglich, wenn sich die Windgeschwindigkeit nicht ändert bzw. sich in einem Strömungsfeld der Anlage keine Störungen ausbreiten. Beispielsweise kann durch Analyse eines mathematischen Zusammenhanges zwischen mehreren Windböen mit unterschiedlicher Windgeschwindigkeit und den bei den einzelnen Windkraftanlagen dadurch hervorgerufenen Leistungsanstiegen ein Zusammenhang zwischen einer Windgeschwindigkeit und einer abgegebenen Leistung bzw. eine Korrelationsfunktion abgeleitet werden, sodass in weiterer Folge an jeder einzigen Windkraftanlage anhand der gemessenen Leistung mittels der Korrelationsfunktion die Bestimmung der Windgeschwindigkeit erfolgen kann.

Ist ein entsprechender Zusammenhang aus mehreren Messergebnissen abgeleitet, ist es daher günstig, wenn der Zustandswert gemessen wird und die Windgeschwindigkeit mittels des gemessenen Zustandswertes und des Zusammenhanges zwischen Windgeschwindigkeit und Zustandswert bestimmt wird. Dadurch kann die Windgeschwindigkeit kontinuierlich mit hoher Genauigkeit bestimmt werden.

Mit Vorteil werden mehr als zwei Windkraftanlagen eingesetzt, um eine Richtung der Windgeschwindigkeit zu bestimmen. Üblicherweise sind Windkraftanlagen in einem Windkraftpark bzw. in einer Anlage regelmäßig verteilt angeordnet. Durch Einbindung mehrerer, vorzugsweise sämtlicher, Windkraftanlagen einer Anlage kann über die Zeitpunkte, mit welcher eine Windböe die einzelnen Windkraftanlagen erreicht, sehr gut auf eine Ausbreitungsrichtung der Windböe geschlossen werden. Die derart erfasste Richtung der Windböe kann insbesondere bei Bestimmung eines Zusammenhanges zwischen der gemessenen Windgeschwindigkeit und der Zustandsgröße, beispielsweise der Leistung einer Windkraftanlage, berücksichtigt werden, wenn eine Ausbreitungsrichtung der Windböe von einer dominierenden Windrichtung im Strömungsfeld abweicht, sodass die zur dominierenden Windrichtung ausgerichteten Windkraftanlagen nicht optimal in Bezug auf die Windböe ausgerichtet sind.

Die weitere Aufgabe wird durch eine Anlage der eingangs genannten Art gelöst, bei welcher bei den zumindest zwei Windkraftanlagen ein Auftreten einer Änderung einer lokalen Windgeschwindigkeit erfassbar ist, wobei eine Zeitdifferenz erfassbar ist, um welche die lokalen Änderungen der Windgeschwindigkeit bei den einzelnen Windkraftanlagen versetzt auftreten und wobei eine Datenverarbeitungseinrichtung vorgesehen ist, mit welcher durch Division eines Abstandes zwischen den Windkraftanlagen durch die Zeitdifferenz die Windgeschwindigkeit bestimmbar ist.

Durch Division des bekannten Abstandes zwischen den Windkraftanlagen und der erfassten Zeitdifferenz kann somit einfach auf eine Windgeschwindigkeit der Strömungsdiskontinuität zwischen den Windkraftanlagen geschlossen werden, mit welcher sich die Strömungsdiskontinuität bzw. eine Störung innerhalb eines Strömungsfeldes der Anlage ausbreitet.

Günstig ist es, wenn die Änderung der Windgeschwindigkeit bei den Windkraftanlagen mittels Messung einer von der Windgeschwindigkeit abhängigen Zustandsgröße der Windkraftanlage möglich ist, insbesondere einer erzeugten Leistung der Windkraftanlage.

Zur Bestimmung der Windgeschwindigkeit mit besonders hoher Genauigkeit ist es von Vorteil, wenn die Zustandsgröße kontinuierlich oder mit einer Abtastfrequenz von mehr als 0,1 Hz, insbesondere mehr als 1 Hz, vorzugsweise mehr als 10 Hz, messbar ist. Üblicherweise ist eine Einrichtung zur Erfassung der erzeugten Leistung der Windkraftanlage vorgesehen, mit welcher die Leistung mit entsprechender Frequenz messbar ist.

Um die Windgeschwindigkeit mit der erfindungsgemäßen Anlage auch dann bestimmen zu können, wenn sich in der Windkraftanlage keine Störung des Strömungsfeldes ausbreitet, ist es vorteilhaft, dass ein Datenspeicher zur Speicherung mehrerer Messergebnisse sowie eine Datenverarbeitungsanlage vorgesehen sind, wobei mit der Datenverarbeitungsanlage aus mehreren Messergebnissen ein Zusammenhang zwischen der gemessenen Windgeschwindigkeit und einer Zustandsgröße der Windkraftanlage bestimmbar ist. Über einen derart ermittelten Zusammenhang bzw. eine Korrelationsfunktion oder einen Korrelationskoeffizient kann auch bei nicht fluktuierender Strömung eine Windgeschwindigkeit bestimmt werden, indem aus einer Zustandsgröße, wie einer aktuell erzeugten Leistung, eindeutig auf eine Windgeschwindigkeit geschlossen werden kann.

Mit Vorteil ist ein Datenspeicher vorgesehen, in welchem ein mathematischer Zusammenhang zwischen der Windgeschwindigkeit und einer Zustandsgröße der Windkraftanlage, insbesondere einer erzeugten Leistung, gespeichert ist, sodass eine aktuelle Windgeschwindigkeit anhand der gemessenen Zustandsgröße mittels des mathematischen Zusammenhanges bestimmbar ist. Der mathematische Zusammenhang kann ein Korrelationskoeffizient oder eine Korrelationsfunktion sein, um direkt aus einer gemessenen Zustandsgröße wie einer gemessenen Leistung auf eine aktuelle Windgeschwindigkeit schließen zu können.

Von Vorteil ist es, wenn mehr als zwei Windkraftanlagen vorgesehen sind, welche derart positioniert sind, dass unterschiedliche Ausbreitungsrichtungen von Windböen innerhalb der Anlage erfassbar sind. Hierzu sind die Windkraftanlagen in aller Regel nicht entlang einer Geraden positioniert. Vorzugsweise sind mehrere Windkraftanlagen in mehreren Richtungen regelmäßig verteilt angeordnet, um Ausbreitungsrichtungen von Windböen besonders genau erfassen zu können.

Weitere Merkmale, Vorteile und Wirkungen der Erfindung ergeben sich anhand des nachfolgend dargestellten Ausführungsbeispiels. In den Zeichnungen, auf welche dabei Bezug genommen wird, zeigen:
Fig. 1 eine Anlage mit mehreren Windkraftanlagen;
Fig. 2 schematische Leistungsverläufe mehrerer Windkraftanlagen der in Fig. 1 dargestellten Anlage.

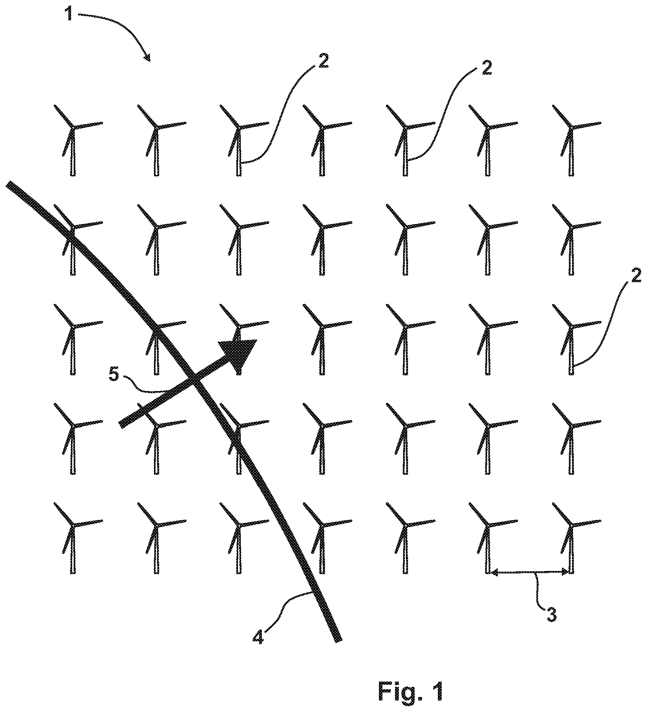

Fig. 1 zeigt eine Anlage 1 mit mehreren regelmäßig verteilt angeordneten Windkraftanlagen 2, welche auch als Windpark bezeichnet wird. Ein Abstand 3 zwischen den einzelnen Windkraftanlagen 2 beträgt etwa 100 m. Schematisch sind eine Front 4 einer Windböe sowie eine Ausbreitungsrichtung 5 derselben dargestellt. Die Windböe weist eine höhere Windgeschwindigkeit als ein stationäres Strömungsfeld der Anlage 1 auf und erreicht die einzelnen Windkraftanlagen 2 abhängig von einer Position derselben zu unterschiedlichen Zeitpunkten. Eine Zeitdifferenz td, um welche die Front 4 benachbarte Windkraftanlagen 2 verzögert erreicht, ist dabei abhängig von einem Abstand 3 der benachbarten Windkraftanlagen 2 sowie der Windgeschwindigkeit und der Ausbreitungsrichtung 5 der Windböe.

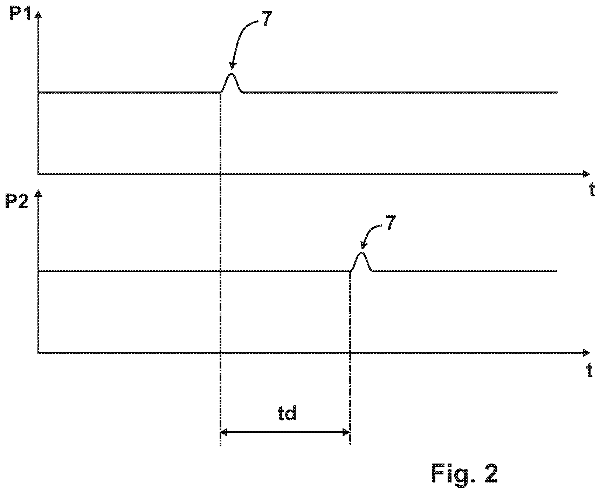

Fig. 2 zeigt zeitliche Verläufe von gemessenen Leistungen zweier benachbarter Windkraftanlagen 2 der in Fig. 1 dargestellten Anlage 1. Wie ersichtlich weisen die Leistungsverläufe zeitlich versetzt auftretende temporäre Leistungsanstiege 6 identer Dauer und Amplitude auf, welche durch ein Passieren der Windböe bedingt sind. Aus einer Zeitdifferenz td, um welche die Leistungsanstiege 6 bei den einzelnen Windkraftanlagen 2 versetzt auftreten, sowie einem bekannten Abstand 3 zwischen den Windkraftanlagen 2 kann auf eine Geschwindigkeit der Windböe geschlossen werden. Die Zeitdifferenz td kann hier automatisiert beispielsweise durch Bestimmung der Zeitpunkte, zu welchen die einzelnen Leistungen Maximalwerte aufweisen, und Bildung der Zeitdifferenz td zwischen diesen Zeitpunkten erfolgen. Ferner kann aus der somit ermittelten Windgeschwindigkeit und einem maximalen Leistungswert während des Leistungsanstieges 6 auf einen Zusammenhang zwischen Windgeschwindigkeit und Leistung der Windkraftanlage 2 bei der aktuell ermittelten Windgeschwindigkeit geschlossen werden.

Des Weiteren weist die Anlage 1 einen Datenspeicher sowie eine Datenverarbeitungsanlage auf, welche nicht dargestellt sind. Im Datenspeicher können Daten verschiedener Messungen, beispielsweise also ermittelte Windgeschwindigkeiten, maximale Leistungen der Windkraftanlagen 2 und Anstiege bzw. die Zeitableitung der abgegebenen Leistung während des Passierens einer Windböe, gespeichert werden, sodass ein Zusammenhang bzw. einer Korrelation zwischen der gemessenen Leistung bzw. einer Ableitung derselben und der gemessenen Windgeschwindigkeit gebildet werden kann. Über diesen Zusammenhang bzw. über die ermittelte Korrelation kann in weiterer Folge mittels der Datenverarbeitungsanlage eine Windgeschwindigkeit auch dann bestimmt werden, wenn sich im Strömungsfeld der Anlage 1 keine Störung bzw.

Windböe ausbreitet. Dadurch ist beispielsweise eine Messung der Windgeschwindigkeit mit hoher Genauigkeit anhand der Leistungsmessung möglich.

Mit einem erfindungsgemäßen Verfahren ist eine hochgenaue Messung einer Windgeschwindigkeit in Windparks möglich, ohne dass hierzu zusätzliche Messeinrichtungen erforderlich wären, wodurch ein Wartungsaufwand der Anlage 1 reduziert wird. Vielmehr kann auf herkömmliche Einrichtungen zur Windgeschwindigkeitsmessung verzichtet werden, sodass beispielsweise kein Anemometer mehr für eine Messung der Windgeschwindigkeit im Betrieb erforderlich ist.

Die Erfassung der Windgeschwindigkeit erfolgt vorzugsweise über die gemessene Leistung, sodass die Windgeschwindigkeit nicht wie mit Verfahren des Standes der Technik nur punktuell ermittelt wird, sondern die effektiv auf den Rotor wirkende Windgeschwindigkeit bestimmbar ist. Durch Einsatz von mehr als zwei Windkraftanlagen 2, welche nicht auf einer Linie angeordnet sind, kann auch eine genaue Bestimmung der Richtung der Windböe erfolgen. Darüber hinaus können über einen Vergleich der Leistungsanstiege 6 bei den einzelnen Windkraftanlagen 2 bei derselben Windböe Daten betreffend eine Qualität der einzelnen Windkraftanlagen 2 ermittelt und verglichen werden. Insbesondere kann ein geringerer Leistungsanstieg 6 bei einer Windkraftanlage 2 verglichen mit vor- und nachgelagerten Windkraftanlagen 2 auf einen Wartungsbedarf bei dieser Windkraftanlage 2 hindeuten.

Da aktuell installierte Windparks bzw. Windkraftanlagen 2 in Windparks in aller Regel mit einer Einrichtung zur Erfassung der erzeugten Leistung ausgestattet sind, ist das Verfahren mit besonders geringem Aufwand auch bei bestehenden Anlagen 1 umsetzbar, um die Windgeschwindigkeit mit hoher Genauigkeit und reduziertem Wartungsaufwand zu erfassen.

Bestehende Einrichtungen zur Windgeschwindigkeitsmessung wie Anemometer oder Ultraschall-Messeinrichtungen können natürlich auch weiterhin verwendet und mit dem erfindungsgemäßen Verfahren kalibriert werden. Dies ist von besonderem Vorteil bei geringen Windgeschwindigkeiten oder niedrigen Temperaturen, da Einrichtungen des Standes der Technik bei derartigen Umgebungsbedingungen häufig eine geringe Genauigkeit aufweisen. Im Unterschied dazu werden beim erfindungsgemäßen Verfahren auch bei geringen Geschwindigkeiten hohe Genauigkeiten erzielt. Eine derartige in situ Kalibrierung ist im Wesentlichen ohne zusätzlichen Aufwand möglich, sodass verglichen mit üblichen Kalibrierverfahren Kosten gespart werden können.

## Patentansprüche

1. Verfahren zur Bestimmung einer Windgeschwindigkeit in einer Anlage (1) mit zumindest zwei beabstandeten Windkraftanlagen (2), **dadurch gekennzeichnet, dass** bei den zumindest zwei Windkraftanlagen (2) ein Auftreten einer Änderung der lokalen Windgeschwindigkeit erfasst wird, wonach zumindest eine Zeitdifferenz (td) bestimmt wird, um welche die lokalen Änderungen bei den zumindest zwei Windkraftanlagen (2) versetzt auftreten, wonach anhand der Zeitdifferenz (td) und eines Abstandes (3) zwischen den Windkraftanlagen (2) die Windgeschwindigkeit bestimmt wird.

2. Verfahren nach Anspruch 1, **dadurch gekennzeichnet, dass** das Auftreten einer Änderung der lokalen Windgeschwindigkeit durch Messung einer von der Windgeschwindigkeit abhängigen Zustandsgröße der Windkraftanlage (2), insbesondere einer durch Wind erzeugten Leistung, erfolgt.

3. Verfahren nach Anspruch 2, **dadurch gekennzeichnet, dass** die Zustandsgröße kontinuierlich oder mit einer Abtastfrequenz von mehr als 0,1 Hz, insbesondere mehr 1 Hz, vorzugsweise mehr als 10 Hz, gemessen wird.

4. Verfahren nach einem der Ansprüche 1 bis 3, **dadurch gekennzeichnet, dass** Messergebnisse gespeichert werden und aus mehreren Messergebnissen ein Zusammenhang zwischen der Windgeschwindigkeit und zumindest einem Zustandswert der Windkraftanlage (2) gebildet wird.

5. Verfahren nach Anspruch 4, **dadurch gekennzeichnet, dass** der Zustandswert gemessen wird und die Windgeschwindigkeit mittels des gemessenen Zustandswertes und des Zusammenhanges zwischen Windgeschwindigkeit und Zustandswert bestimmt wird.

6. Verfahren nach einem der Ansprüche 1 bis 5, **dadurch gekennzeichnet, dass** mehr als zwei Windkraftanlagen (2) eingesetzt werden, um eine Richtung der Windgeschwindigkeit zu bestimmen.

7. Anlage (1) mit zumindest zwei beabstandeten Windkraftanlagen (2), welche zur Durchführung eines Verfahrens nach einem der Ansprüche 1 bis 6 eingerichtet ist, **dadurch gekennzeichnet, dass** bei den zumindest zwei Windkraftanlagen (2) ein Auftreten einer Änderung einer lokalen Windgeschwindigkeit erfassbar ist, wobei eine Zeitdifferenz (td) erfassbar ist, um welche die lokalen Änderungen der Windgeschwindigkeit bei den einzelnen Windkraftanlagen (2) versetzt auftreten und wobei eine Datenverarbeitungseinrichtung vorgesehen ist, mit welcher durch Division eines Abstandes (3) zwischen den Windkraftanlagen (2) durch die Zeitdifferenz (td) die Windgeschwindigkeit bestimmbar ist.

8. Anlage (1) nach Anspruch 7, **dadurch gekennzeichnet, dass** die Änderung der Windgeschwindigkeit bei den Windkraftanlagen (2) mittels Messung einer von der Windgeschwindigkeit abhängigen Zustandsgröße der Windkraftanlage (2) möglich ist, insbesondere einer erzeugten Leistung der Windkraftanlage (2).

9. Anlage (1) nach Anspruch 7 oder 8, **dadurch gekennzeichnet, dass** ein Datenspeicher zur Speicherung mehrerer Messergebnisse sowie eine Datenverarbeitungsanlage vorgesehen sind, wobei mit der Datenverarbeitungsanlage aus mehreren Messergebnissen ein Zusammenhang zwischen der gemessenen Windgeschwindigkeit und einer Zustandsgröße der Windkraftanlage (2) bestimmbar ist.

10. Anlage (1) nach einem der Ansprüche 7 bis 9, **dadurch gekennzeichnet, dass** ein Datenspeicher vorgesehen ist, in welchem ein mathematischer Zusammenhang zwischen der Windgeschwindigkeit und einer Zustandsgröße der Windkraftanlage (2), insbesondere einer erzeugten Leistung, gespeichert ist, sodass eine aktuelle Windgeschwindigkeit anhand der gemessenen Zustandsgröße mittels des mathematischen Zusammenhanges bestimmbar ist.

## Claims

1. A method for determining a wind speed in a facility (1) with at least two wind turbines (2) positioned at a distance from each other, **characterized in that** an occurrence of a change in the local wind speed is detected at the at least two wind turbines (2), according to which at least one time difference (td) is determined by which local changes at the at least two wind turbines (2) are temporally offset in their occurrence, wherein the time difference (td) and a distance (3) between the wind turbines (2) are used as a basis to determine the wind speed.

2. The method according to Claim 1, **characterized in that** the occurrence of a change of the local wind speed is established by measuring a state variable of the wind turbine (2) dependent on the wind speed, in particular a power output generated by wind.

3. The method according to Claim 2, **characterized in that** the state variable is measured continuously or with a sampling rate of higher than 0.1 Hz, in particular higher than 1 Hz, preferably higher than 10 Hz.

4. The method according to any one of Claims 1 to 3, **characterized in that** measurement results are stored and that a correlation between the wind speed and at least one state value of the wind turbine (2) is formed on the basis of a plurality of measurement results.

5. The method according to Claim 4, **characterized in that** the state value is measured, and the wind speed is determined on the basis of the measured state value and the correlation between wind speed and state value.

6. The method according to any one of Claims 1 to 5, **characterized in that** more than two wind turbines (2) are used to determine a direction of the wind speed.

7. A facility (1) having at least two wind turbines (2) positioned at a distance from each other, which facility is configured to execute a method according to any one of Claims 1 to 6, **characterized in that** an occurrence of a change in a local wind speed can be captured at the at least two wind turbines (2), wherein a time difference (td) can be determined by which local changes in the wind speed at the individual wind turbines (2) are temporally offset in their occurrence, and wherein a data processing device is provided, by means of which the wind speed can be determined by dividing a distance (3) between the wind turbines (2) by the time difference (td) .

8. The facility (1) according to Claim 7, **characterized in that** the change in the wind speed at the wind turbines (2) can be established by measuring a state variable of the wind turbine (2) dependent on the wind speed, in particular a generated power output of the wind turbine (2) .

9. The facility (1) according to Claim 7 or 8, **characterized in that** a data storage device for storing a plurality of measurement results as well as a data processing system are provided, wherein the plurality of measurement results can be used to determine a correlation between the measured wind speed and a state variable of the wind turbine (2) by means of the data processing system.

10. The facility (1) according to any one of Claims 7 to 9, **characterized in that** a data storage device is provided, in which a mathematical correlation between the wind speed and a state variable of the wind turbine (2), in particular a generated power output, is stored, such that a current wind speed can be determined on the basis of the measured state variable via the mathematical correlation.

## Revendications

1. Procédé, destiné à déterminer une vitesse du vent dans une centrale (1) pourvue d'au moins deux centrales éoliennes (2) écartées, **caractérisé en ce qu'**en présence d'au moins deux centrales éoliennes (2), une production d'une variation de la vitesse du vent locale est déterminée, suite à quoi, au moins une différence temporelle (td) est déterminée, de la valeur de laquelle les variations locales se produisent en décalage sur les au moins deux centrales éoliennes (2), suite à quoi, à l'aide de la différence temporelle (td) et d'un écart (3) entre les centrales éoliennes (2), la vitesse du vent est déterminée.

2. Procédé selon la revendication 1, **caractérisé en ce que** la production d'une variation de la vitesse du vent locale s'effectue par une mesure d'une grandeur d'état dépendant de la vitesse du vent de la centrale éolienne (2), notamment d'une puissance générée par le vent.

3. Procédé selon la revendication 2, **caractérisé en ce que** la grandeur d'état est mesurée en continu ou avec une fréquence de balayage supérieure à 0,1 Hz, notamment supérieure à 1 Hz, de préférence supérieure à 10 Hz.

4. Procédé selon l'une quelconque des revendications 1 à 3, **caractérisé en ce que** des résultats de mesure sont mémorisés et à partir de plusieurs résultats de mesure, une relation entre la vitesse du vent et au moins une valeur d'état de la centrale éolienne (2) est créée.

5. Procédé selon la revendication 4, **caractérisé en ce que** la valeur d'état est mesurée et la vitesse du vent est déterminée au moyen de la valeur d'état mesurée et de la relation entre la vitesse du vent et la valeur d'état.

6. Procédé selon l'une quelconque des revendications 1 à 5, **caractérisé en ce que** plus de deux centrales éoliennes (2) sont utilisées pour déterminer une direction de la vitesse du vent.

7. Centrale (1), pourvue d'au moins deux centrales éoliennes (2) écartées, lesquelles sont aménagées pour réaliser un procédé selon l'une quelconque des revendications 1 à 6, **caractérisée en ce que** sur les au moins deux centrales éoliennes (2), une production d'une variation d'une vitesse du vent locale est susceptible d'être détectée, une différence temporelle (td) étant susceptible d'être détectée, de la valeur de laquelle les variations locales de la vitesse du vent se produisent en décalage sur les centrales éoliennes (2) individuelles et un système de traitement des données étant prévu, à l'aide duquel par division d'un écart (3) entre les centrales éoliennes (2) par la différence temporelle (td), la vitesse du vent est susceptible d'être déterminée.

8. Centrale (1) selon la revendication 7, **caractérisée en ce que** la variation de la vitesse du vent sur les centrales éoliennes (2) est possible par une mesure d'une grandeur d'état de la centrale éolienne (2) dépendant de la vitesse du vent, notamment d'une puissance générée par la centrale éolienne (2).

9. Centrale (1) selon la revendication 7 ou 8, **caractérisée en ce qu'**il est prévu une mémoire de données, pour la mémorisation de plusieurs résultats de mesure, ainsi qu'un dispositif de traitement de données, à l'aide du dispositif de traitement de données, à partir de plusieurs résultats de mesure, une relation entre la vitesse du vent mesurée et une grandeur d'état de la centrale éolienne (2) étant susceptible d'être déterminée.

10. Centrale (1) selon l'une quelconque des revendications 7 à 9, **caractérisée en ce qu'**il est prévu une mémoire de données dans laquelle une relation mathématique entre la vitesse du vent et une grandeur d'état de la centrale éolienne (2), notamment une puissance générée est mémorisée, de sorte qu'une vitesse du vent actuelle soit susceptible d'être déterminée à l'aide de la grandeur d'état mesurée, au moyen de la relation mathématique.
